# EUROPÄISCHE PATENTSCHRIFT

(11) **EP 4 548 732 B1**
(45) Veröffentlichungstag und Bekanntmachung des Hinweises auf die Patenterteilung: **12.08.2026**
(21) Anmeldenummer: 24401024.5
(22) Anmeldetag: 16.10.2024
(51) Int. Cl.: A01B 29/06, A01B 49/02, G06Q 50/02

(54) **VERFAHREN ZUM BETREIBEN EINES LANDWIRTSCHAFTLICHEN BODENBEARBEITUNGSGERÄTS**
METHOD FOR OPERATING AN AGRICULTURAL SOIL WORKING IMPLEMENT
PROCÉDÉ DE FONCTIONNEMENT D'UN APPAREIL DE TRAITEMENT DU SOL AGRICOLE

(30) Priorität: 02.11.2023 DE 102023130245
(43) Veröffentlichungstag der Anmeldung: 07.05.2025
(73) Patentinhaber: Amazonen-Werke H. Dreyer SE & Co. KG, 49205 Hasbergen (DE)
(72) Erfinder: Johannaber, Stefan Jan, 49205 Hasbergen (DE); Wessels, Thomas, 49205 Hasbergen (DE); Stein, Florian, 49205 Hasbergen (DE); Stark, Philipp, 49205 Hasbergen (DE)

(56) Entgegenhaltungen:
- EP-A1- 3 135 086
- EP-A1- 3 476 188
- US-A1- 2022 163 436

## Beschreibung

Die Erfindung betrifft ein Verfahren zum Betreiben nach dem Oberbegriff des Patentanspruchs 1 und ein landwirtschaftliches Arbeitsgerät nach dem Oberbegriff des Patentanspruchs 10.

Landwirtschaftliche Arbeitsgeräte, beispielsweise Grubber oder Sämaschinen, sind häufig mit einer oder mehreren Walzen ausgestattet, mittels welcher der Boden einer landwirtschaftlichen Nutzfläche beispielsweise aufgebrochen und/oder zerkrümelt und/oder rückverfestigt werden kann. Insbesondere durch die zunehmende Automatisierung von Bodenbearbeitungsvorgängen in der Landwirtschaft gewinnt das Überwachen von Arbeitsgeräten und insbesondere von Bodenbearbeitungswerkzeugen, wie Walzen, zur Sicherstellung gleichbleibend hoher Arbeitsqualität immer weiter an Bedeutung.

Wird die Walze eines landwirtschaftlichen Arbeitsgeräts während eines Bodenbearbeitungsvorgangs nur unzureichend überwacht, können beispielsweise fehlerhafte Maschineneinstellungen und/oder ungünstige Bodenverhältnisse sowie daraus resultierende unzureichende Arbeitsergebnisse und/oder mögliche Schäden an dem Arbeitsgerät oftmals nicht rechtzeitig erkannt und/oder entsprechende Gegenmaßnahmen nicht rechtzeitig ergriffen werden.

US 2022 163 436 A1 eine Erkennung von Verstopfungen von Bodenbearbeitungselementen in, für welche ein Vibrationssignal ausgewertet wird, das über eine Sensoreinrichtung gemessen wird, welche einen Beschleunigungssensor und ein Gyroskop umfasst und die Vibrationen erfasst, die durch die Wechselwirkung zwischen Maschine und Boden entstehen. EP 3 476 188 A1 betrifft die Erfassung der Oberflächenbeschaffenheit des bearbeiteten Bodens basierend auf von der Untergrundbeschaffenheit abhängigen Schwingungen einer Walzeneinheit.

Die der Erfindung zugrundeliegende Aufgabe besteht somit darin, die Überwachung von Walzen landwirtschaftlicher Arbeitsgeräte zur Sicherstellung konstanter Arbeitsergebnisse und eines einwandfreien Betriebs zu verbessern.

Die Aufgabe wird durch ein Verfahren nach Anspruch 1 gelöst, wobei die erfassten Sensordaten zum Veranlassen von betriebszustandsabhängigen Folgemaßnahmen mittels einer elektronischen Datenverarbeitungseinrichtung ausgewertet werden.

Durch eine gezielte Überwachung der Walze eines landwirtschaftlichen Arbeitsgeräts während Bodenbearbeitungsvorgängen wird sichergestellt, dass fehlerhafte Maschineneinstellungen und/oder ungünstige Bodenverhältnisse sowie daraus folgende mangelhafte Arbeitsqualität und/oder mögliche Schäden an dem Arbeitsgerät frühzeitig erkannt werden. Werden Probleme während des Bodenbearbeitungsprozesses durch die Überwachung frühzeitig erkannt, können die Problemursachen ermittelt und mit entsprechenden Folgemaßnahmen behoben werden.

Das Auswerten von Sensordaten zum Veranlassen von betriebszustandsabhängigen Folgemaßnahmen stellt zudem eine einfache, kostengünstige und zugleich wenig fehleranfällige Lösung dar, mittels welcher jederzeit eine hohe Einsatzsicherheit und eine hohe Arbeitsqualität landwirtschaftlicher Arbeitsgeräte, insbesondere im Hinblick auf autonome Bearbeitungsvorgänge, sichergestellt werden kann.

Das Arbeitsgerät kann ein Bodenbearbeitungsgerät, insbesondere ein landwirtschaftlicher Grubber oder eine landwirtschaftliche Egge sein. Die Walze kann eine Vorlaufwalze oder eine Nachlaufwalze sein. Es können, insbesondere an Sämaschinen, Werkzeuge, beispielsweise Säschare oder andere Bearbeitungswerkzeuge, sowohl hinter als auch vor der Walze angeordnet sein. Vorzugsweise ist das Verfahren auch für andere landwirtschaftliche Arbeitsgeräte mit einer Walze geeignet. Die Datenverarbeitungseinrichtung kann an dem landwirtschaftlichen Arbeitsgerät angeordnet sein. Zudem kann die Datenverarbeitungseinrichtung an einem Zug- und/oder Trägerfahrzeug für das landwirtschaftliche Arbeitsgerät angeordnet sein. Des Weiteren kann die Datenverarbeitungseinrichtung als externe Datenverarbeitungseinrichtung ausgebildet sein, welche drahtlos per Funk mit dem landwirtschaftlichen Arbeitsgerät und/oder der sensorischen Erfassungseinrichtung verbunden ist. Mittels der sensorischen Erfassungseinrichtung kann der Betrieb der Walze vorzugsweise automatisch überwacht werden.

Vorzugsweise ist die elektronische Datenverarbeitungseinrichtung als zentrale Recheneinheit ausgebildet und/oder an dem landwirtschaftlichen Arbeitsgerät angeordnet, wobei die elektronische Datenverarbeitungseinrichtung die von der Erfassungseinrichtung erfassten Sensordaten empfängt und verarbeitet, um auf den aktuellen Betriebszustand der Walze zu schließen. Vorzugsweise ist die zumindest eine sensorische Erfassungseinrichtung signalleitend per Kabel oder kabellos mit der elektronischen Datenverarbeitungseinrichtung verbunden. Vorzugsweise ist die elektronische Datenverarbeitungseinrichtung per ISOBUS und/oder TIM (Tractor Implement Management) mit einer elektronischen Steuerungseinrichtung und/oder einem Bedienterminal eines Zug- und/oder Trägerfahrzeugs des Arbeitsgeräts signalleitend verbunden.

In einer bevorzugten Ausführungsform des erfindungsgemäßen Verfahrens betreffen die betriebszustandsabhängigen Folgemaßnahmen das Berechnen von auf die Walze wirkenden Zug- und/oder Druckkräften betreffende Kraftdaten auf Grundlage der erfassten Sensordaten. Alternativ oder zusätzlich betreffen die betriebszustandsabhängigen Folgemaßnahmen das Berechnen von dem Auflagedruck der Walze auf den Boden einer landwirtschaftlichen Nutzfläche betreffenden Auflagedruckdaten auf Grundlage der erfassten Sensordaten. Alternativ oder zusätzlich betreffen die betriebszustandsabhängigen Folgemaßnahmen das Übermitteln der erfassten Sensordaten und/oder der berechneten Kraftdaten und/oder der berechneten Auflagedruckdaten von der elektronischen Datenverarbeitungseinrichtung an eine elektronische Steuereinheit des Arbeitsgeräts und/oder an eine elektronische Steuerungseinrichtung eines Zug- und/oder Trägerfahrzeugs für das Arbeitsgerät. Alternativ oder zusätzlich umfassen die betriebszustandsabhängigen Folgemaßnahmen das Anzeigen der erfassten Sensordaten und/oder der berechneten Kraftdaten und/oder der berechneten Auflagedruckdaten mittels einer elektronischen Anzeigeeinrichtung. Alternativ oder zusätzlich umfassen die betriebszustandsabhängigen Folgemaßnahmen das Speichern der erfassten Sensordaten und/oder der berechneten Kraftdaten und/oder der berechneten Auflagedruckdaten auf einem elektronischen Datenspeicher der Datenverarbeitungseinrichtung und/oder der Steuereinheit und/oder der Steuerungseinrichtung und/oder auf einem externen elektronischen Datenspeicher. Vorzugsweise ist die Walze bei Bodenkontakt der Walze auf dem Boden abgestützt, wobei sich durch die von dem Boden auf die Walze wirkenden Kräfte eine entsprechende Belastung an einer Verstelleinrichtung für die Walze einstellt.

Mittels der Verstelleinrichtung ist die Walze vorzugsweise relativ zum Boden verfahrbar, sodass der Auflagedruck der Walze auf den Boden und/oder die Arbeitstiefe der Walze in den Boden einstellbar ist. Die durch den Boden auf die Walze wirkenden Kräfte sind beispielsweise von den Bodenbearbeitungswerkzeugen und der aktuellen Einstellung, insbesondere der Arbeitstiefe, der Bodenbearbeitungswerkzeuge sowie von der Beschaffenheit des Bodens der landwirtschaftlichen Nutzfläche abhängig. Zudem können die auf die Walze wirkenden Kräfte durch den sogenannten Bulldozing-Effekt beeinflusst werden, wobei sich Bodenmaterial vor der Walze sammeln kann, welches von der Walze geschoben wird. Der Bulldozing-Effekt erzeugt entgegen der Fahrtrichtung des Arbeitsgeräts wirkende Kräfte, welche den Zugwiderstand des Arbeitsgeräts erhöhen und durch die Erzeugung eines Moments auf den Anlenkpunkt eine Belastung auf die Verstelleinrichtung für die Walze erzeugen. Die Belastung auf die Verstelleinrichtung kann sich aus vertikal wirkenden Kraftanteilen, welche beispielsweise aus Aufstandskräften der Walze auf den Boden resultieren, und horizontal wirkenden Kraftanteilen, welche beispielsweise aus dem Rollwiderstand der Walze resultieren, zusammensetzen. Vorzugsweise weist die Verstelleinrichtung eine schräg ausgerichtete Einbaulage, insbesondere eine zur Hochachse und/oder zur Längsachse des Arbeitsgeräts geneigte Einbaulage, auf, sodass horizontal und vertikal wirkende Kräfte auf die Verstelleinrichtung erfassbar sind. Vorzugsweise kann die Erfassungseinrichtung die vertikalen und/oder die horizontalen Kraftanteile und/oder eine aus den vertikalen und horizontalen Kraftanteilen resultierende Kraft erfassen. Mittels der erfassten Sensordaten kann diese Druckbelastung und somit das belastungsauslösende Bodenmaterial, welches die Walze verschmutzen und/oder beschädigen kann, erfasst werden. Vorzugsweise erfolgt das Übermitteln von der elektronischen Datenverarbeitungseinrichtung an die elektronische Steuereinheit des Arbeitsgeräts und/oder an die elektronische Steuerungseinrichtung des Zug- und/oder Trägerfahrzeugs für das Arbeitsgerät per ISOBUS und/oder TIM. Vorzugsweise ist die Steuerungseinrichtung Bestandteil eines Bedienterminals für das Zug- und/oder Trägerfahrzeug und/oder für das Arbeitsgerät. Vorzugsweise ist das Bedienterminal in einer Fahrerkabine des Zug- und/oder Trägerfahrzeugs angeordnet. Vorzugsweise ist die Anzeigeeinrichtung Bestandteil des Bedienterminals. Die Anzeigeeinrichtung kann außerdem Bestandteil einer externen Recheneinheit, beispielsweise eines externen PC oder eines externen Servers sein, wobei die anzuzeigenden Daten dann kabellos an die Anzeigeeinrichtung, insbesondere per Funk, übermittelt werden. Die Anzeigeeinrichtung ist vorzugsweise als Display ausgebildet.

In dem erfindungsgemäßen Verfahren umfassen die betriebszustandsabhängigen Folgemaßnahmen das Berechnen von dem Gewicht und/oder die Gewichtskraft der Walze betreffenden Gewichtsdaten auf Grundlage der erfassten Sensordaten. Alternativ oder zusätzlich umfassen die betriebszustandsabhängigen Folgemaßnahmen das Ermitteln der Präsenz von an der Walze anhaftendem Fremdmaterial auf Grundlage der berechneten Gewichtsdaten und/oder der erfassten Sensordaten. Alternativ oder zusätzlich umfassen die betriebszustandsabhängigen Folgemaßnahmen das Berechnen des Gewichts und/oder der Gewichtskraft des an der Walze anhaftenden Fremdmaterials auf Grundlage der erfassten Sensordaten und/oder der berechneten Gewichtsdaten.

Alternativ oder zusätzlich umfassen die betriebszustandsabhängigen Folgemaßnahmen das Übermitteln der berechneten Gewichtsdaten und/oder des berechneten Gewichts und/oder der berechneten Gewichtskraft des an der Walze anhaftenden Fremdmaterials von der elektronischen Datenverarbeitungseinrichtung an eine elektronische Steuereinheit des Arbeitsgeräts und/oder an eine elektronische Steuerungseinrichtung eines Zug- und/oder Trägerfahrzeugs für das Arbeitsgerät. Alternativ oder zusätzlich umfassen die betriebszustandsabhängigen Folgemaßnahmen das Anzeigen eines die Präsenz von der Walze anhaftendem Fremdmaterial betreffenden Bedienerhinweises und/oder der berechneten Gewichtsdaten und/oder des berechneten Gewichts und/oder der berechneten Gewichtskraft des an der Walze anhaftenden Fremdmaterials mittels einer elektronischen Anzeigeeinrichtung. Alternativ oder zusätzlich umfassen die betriebszustandsabhängigen Folgemaßnahmen das Speichern der berechneten Gewichtsdaten und/oder des berechneten Gewichts und/oder der berechneten Gewichtskraft des an der Walze anhaftenden Fremdmaterials auf einem elektronischen Datenspeicher der Datenverarbeitungseinrichtung und/oder der Steuereinheit und/oder der Steuerungseinrichtung und/oder auf einem externen elektronischen Datenspeicher.

Vorzugsweise kann das landwirtschaftliche Arbeitsgerät ausgehoben werden, um den Bodenkontakt des Arbeitsgeräts, insbesondere der Walze des Arbeitsgeräts, aufzuheben. Ein getragenes Arbeitsgerät wird vorzugsweise über die Dreipunkthydraulik des Zug- oder Trägerfahrzeugs ausgehoben. Ein gezogenes Arbeitsgerät kann über die Tiefenführung, insbesondere durch höhenverstellbare Stützräder und/oder Fahrwerksräder, ausgehoben werden. Im ausgehobenen Zustand des Arbeitsgeräts, in welchem die Walze keinen Bodenkontakt hat, wirkt durch das Gewicht der Walze eine Zugkraft auf die Verstelleinrichtung der Walze, mittels welcher das Gewicht der Walze bestimmt werden kann. Vorzugsweise ist das Gewicht und/oder die Gewichtskraft der Walze im Normalzustand, in welchem die Walze unbeschädigt und nicht durch anhaftendes Fremdmaterial verunreinigt ist, bekannt, wobei das Gewicht und/oder die Gewichtskraft der Walze im Normalzustand als Referenzwert definiert sein kann. Ein Referenzwert kann außerdem von einem Bediener des Arbeitsgeräts ermittelt und/oder manuell vorgegeben werden. Beispielsweise kann eine Kalibrierfahrt zum Optimieren der Maschineneinstellung und/oder zum gezielten Setzen von Referenzwerten durchgeführt werden, wobei während der Kalibrierfahrt gegebenenfalls unterschiedliche Maschinenparameter betrachtet und/oder angepasst werden können, beispielsweise eine Anstellung der Bodenbearbeitungswerkzeuge zum Boden, ein Wechsel der Bodenbearbeitungswerkzeuge und/oder die Fahrgeschwindigkeit des Arbeitsgeräts. Abweichungen von vorgegebenen Referenzwerten können auf eine fehlerhafte Funktion des Arbeitsgeräts hinweisen. Ein zu niedriges Gewicht der Walze kann beispielsweise auf Schäden an der Walze und/oder einen Verlust der Walze hindeuten, wobei dies in einer niedrigeren Zugkraft an der Verstelleinrichtung resultiert. Ein erhöhtes Gewicht der Walze kann auf an der Walze anhaftendes Fremdmaterial hindeuten, wobei dies in einer höheren Zugkraft an der Verstelleinrichtung der Walze resultiert.

In einer Weiterbildung des erfindungsgemäßen Verfahrens umfassen die betriebszustandsabhängigen Folgemaßnahmen das Ableiten von einem Betriebszustand und/oder Belastungszustand der Walze betreffenden Warnhinweisen auf Grundlage der erfassten Sensordaten mittels der elektronischen Datenverarbeitungseinrichtung. Alternativ oder zusätzlich umfassen die betriebszustandsabhängigen Folgemaßnahmen das Ableiten von der Bedienung und/oder das Einstellen des Arbeitsgeräts und/oder der Walze betreffenden Bedienungsempfehlungen auf Grundlage der erfassten Sensordaten mittels der elektronischen Datenverarbeitungseinrichtung. Alternativ oder zusätzlich umfassen die betriebszustandsabhängigen Folgemaßnahmen das Übermitteln der Warnhinweise und/oder der Bedienungsempfehlungen von der elektronischen Datenverarbeitungseinrichtung an eine elektronische Steuereinheit des Arbeitsgeräts und/oder an eine elektronische Steuerungseinrichtung eines Zug- und/oder Trägerfahrzeugs für das Arbeitsgerät. Alternativ oder zusätzlich umfassen die betriebszustandsabhängigen Folgemaßnahmen das Anzeigen der Warnhinweise und/oder der Bedienungsempfehlungen mittels einer elektronischen Anzeigeeinrichtung.

Ergeben die Sensordaten, dass die Belastung an der Verstelleinrichtung der Walze auffällig ist, kann dies auf Beschädigungen, Verschmutzungen und/oder falsche Einstellungen der Walze hindeuten. Werden nicht optimale Einstellungen oder auffällige Belastungen der Walze festgestellt, kann die Datenverarbeitungseinrichtung einen Warnhinweis ausgeben, welcher beispielsweise einem Bediener des Arbeitsgeräts angezeigt wird, sodass der Bediener des Arbeitsgeräts das Arbeitsgerät beispielsweise zur Vermeidung von Beschädigungen der Walze anhalten kann. Zudem kann die Datenverarbeitungseinrichtung Bedienungsempfehlungen ausgeben, welche einem Bediener das Verändern von Einstellungen des Arbeitsgeräts vorschlägt, um Beschädigungen zu vermeiden und/oder um die Arbeitsqualität zu verbessern. Zudem kann die Datenverarbeitungseinrichtung einen Verschleiß und/oder Abnutzungszustand der Walze und daraus entsprechende Wartungshinweise, beispielsweise ein angepasstes Wartungsintervall oder einen Hinweis, dass die Walze ausgetauscht werden muss, ableiten. Vorzugsweise werden Warnhinweise und/oder Bedienerhinweise angezeigt, sobald sich die erfassten Sensordaten außerhalb eines definierten Toleranzbereichs bewegen. Vorzugsweise sind die Toleranzgrenzen von einem Bediener manuell anpassbar. Der Toleranzbereich kann zudem automatisch mittels der Datenverarbeitungseinrichtung, beispielsweise durch den Einsatz von künstlicher Intelligenz (KI) angepasst werden. Die obere und die untere Grenze des Toleranzbereichs sind insbesondere nutzpflanzenspezifisch und/oder nutzflächenspezifisch und beispielsweise von einer beabsichtigten Rückverfestigung des Bodens der Nutzfläche und/oder von Rolleigenschaften der Walze abhängig. Vorzugsweise sind die obere und die untere Grenze des Toleranzbereichs derart gewählt, dass innerhalb des definierten Toleranzbereichs eine für eine jeweilige Nutzpflanze notwendige Rückverfestigung erzielt wird, ohne dass das Rollen der Walze auf dem Boden der Nutzfläche beeinträchtigt wird, sodass eine gewünschte Arbeitsqualität erzielt werden kann.

Es ist zudem ein erfindungsgemäßes Verfahren vorteilhaft, bei welchem die betriebszustandsabhängigen Folgemaßnahmen das Ableiten von Steuerungsvorgaben zum Steuern des Arbeitsgeräts und/oder des Zug- und/oder Trägerfahrzeugs für das Arbeitsgerät für einen aktuellen Bodenbearbeitungsvorgang und/oder für zukünftige Bodenbearbeitungsvorgänge auf einer landwirtschaftlichen Nutzfläche auf Grundlage der erfassten Sensordaten mittels der elektronischen Datenverarbeitungseinrichtung umfassen. Alternativ oder zusätzlich umfassen die betriebszustandsabhängigen Folgemaßnahmen das Übermitteln der Steuerungsvorgaben von der elektronischen Datenverarbeitungseinrichtung an die elektronische Steuereinheit des Arbeitsgeräts und/oder an die elektronische Steuerungseinrichtung eines Zug- und/oder Trägerfahrzeugs für das Arbeitsgerät. Alternativ oder zusätzlich umfassen die betriebszustandsabhängigen Folgemaßnahmen das Speichern der Steuerungsvorgaben auf einem elektronischen Datenspeicher der Datenverarbeitungseinrichtung und/oder der Steuereinheit und/oder der Steuerungseinrichtung und/oder auf einem externen elektronischen Datenspeicher. Alternativ oder zusätzlich umfassen die betriebszustandsabhängigen Folgemaßnahmen das Auslesen der Steuerungsvorgaben aus dem elektronischen Datenspeicher der Datenverarbeitungseinrichtung und/oder der Steuereinheit und/oder der Steuerungseinrichtung und/oder aus dem externen elektronischen Datenspeicher. Alternativ oder zusätzlich umfassen die betriebszustandsabhängigen Folgemaßnahmen das Steuern des Arbeitsgeräts während eines Bodenbearbeitungsvorgangs mittels der elektronischen Steuereinheit und/oder des Zug- oder Trägerfahrzeugs des Arbeitsgeräts mittels der elektronischen Steuerungseinrichtung auf Grundlage der Steuerungsvorgaben. Auf Grundlage der Steuerungsvorgaben kann das Arbeitsgerät vorzugsweise vollautonome oder zumindest teilautonome Bodenbearbeitungsvorgänge mit Unterstützung eines Bedieners des Arbeitsgeräts ausführen.

**In** einer weiteren bevorzugten Ausführungsform des erfindungsgemäßen Verfahrens betreffen die Steuerungsvorgaben das Anpassen der Arbeitstiefe von Bodenbearbeitungswerkzeugen des Arbeitsgeräts in den Boden einer landwirtschaftlichen Nutzfläche mittels einer Verstelleinrichtung für die Walze. Alternativ oder zusätzlich betreffen die Steuerungsvorgaben das Ausheben der Walze und/oder des Arbeitsgeräts zum Aufheben des Bodenkontakts der Walze mit dem Boden der landwirtschaftlichen Nutzfläche mittels einer Aushubeinrichtung. Alternativ oder zusätzlich betreffen die Steuerungsvorgaben das Verlangsamen und/oder Unterbrechen des Bodenbearbeitungsvorgangs mittels des Arbeitsgeräts. Alternativ oder zusätzlich betreffen die Steuerungsvorgaben das Durchführen eines Reinigungsvorgangs zum Reinigen der Walze von anhaftenden Fremdmaterialien. Die Steuerungsvorgaben können beispielsweise eine Fahrgeschwindigkeit des Zug- oder Trägerfahrzeugs, das Stoppen des Bodenbearbeitungsvorgangs, das Vornehmen von Veränderungen an Einstellungen des Arbeitsgeräts, beispielsweise der Arbeitstiefe der Walze, betreffen.

Ergeben die Sensordaten beispielsweise, dass auffällig hohe Kräfte auf die Walze wirken, welche zu einer herabgesetzten Arbeitsqualität führen könnten, leitet die Datenverarbeitungseinrichtung aus den Sensordaten Steuerungsvorgaben ab, welche an die Steuerungseinrichtung des Zug- oder Trägerfahrzeugs übermittelt werden, woraufhin die Steuerungseinrichtung das Verlangsamen oder das Anhalten des Bodenbearbeitungsvorgangs und/oder eine Anpassung der Arbeitstiefe der Bodenbearbeitungswerkzeuge in den Boden der Nutzfläche bewirkt. Zum Durchführen des Reinigungsvorgangs kann beispielsweise an der Walze anhaftendes Fremdmaterial durch Fahren des Arbeitsgeräts mit Bodenkontakt der Walze von der Walze am Boden der Nutzfläche abgestreift werden. Zudem kann an der Walze anhaftendes Fremdmaterial durch einen Rüttelvorgang, welcher beispielsweise mittels der Verstelleinrichtung und/oder mittels einer Dreipunkhydraulik erzeugt wird, von der Walze entfernt werden. Vorzugsweise wird der Reinigungsvorgang automatisch ausgeführt.

**In** einer Weiterbildung des erfindungsgemäßen Verfahrens umfassen die betriebszustandsabhängigen Folgemaßnahmen das Erfassen von der Geo-Position des Arbeitsgeräts betreffenden Positionsdaten während des Bodenbearbeitungsvorgangs, insbesondere in Abhängigkeit der erfassten Sensordaten, mittels einer elektronischen Positionserfassungseinrichtung. Alternativ oder zusätzlich umfassen die betriebszustandsabhängigen Folgemaßnahmen das Abspeichern der erfassten Positionsdaten auf dem elektronischen Datenspeicher der Datenverarbeitungseinrichtung und/oder der Steuereinheit und/oder der Steuerungseinrichtung und/oder auf dem externen elektronischen Datenspeicher. Vorzugsweise ist die Positionserfassungseinrichtung signalleitend mit der Datenverarbeitungseinrichtung verbunden. Die Positionserfassungseinrichtung kann an dem Arbeitsgerät oder an dem Zug- oder Trägerfahrzeug für das Arbeitsgerät angeordnet sein. Die Geo-Position wird vorzugsweise permanent während des Bodenbearbeitungsvorgangs erfasst und permanent oder in definierten Zeitabständen und/oder bei Auffälligkeiten in den Sensordaten gespeichert. Die Geo-Position des Arbeitsgeräts betreffende Positionsdaten können zudem nur in Abhängigkeit der erfassten Sensordaten, beispielsweise bei Auffälligkeiten in den Sensordaten, erfasst und/oder abgespeichert werden. Durch das Erfassen und Abspeichern der Positionsdaten kann nach einem Bodenbearbeitungsvorgang auf einer landwirtschaftlichen Nutzfläche im Nachhinein nachvollzogen werden, an welchen Geo-Positionen auf der Nutzfläche Auffälligkeiten in den Sensordaten beispielsweise auf unzureichende Arbeitsqualität hinweisen.

Durch die gespeicherten Positionsdaten mit den Geo-Positionen, an welchen Auffälligkeiten in den Sensordaten erkannt wurden, welche beispielsweise eine erhöhte Krafteinwirkung auf die Walze betreffen, kann die Arbeitsqualität nach einem Bodenbearbeitungsvorgang gezielt kontrolliert und/oder ausgebessert werden. Außerdem können die Positionsdaten und/oder die Sensordaten bei zukünftigen Bodenbearbeitungsvorgängen, insbesondere bei der Einstellung der Bodenbearbeitungswerkzeuge, berücksichtigt werden. Vorzugsweise wird aus den erfassten Positionsdaten eine digitale Datenbank erstellt, in welcher die Geo-Positionen gespeichert und auf Muster hin ausgewertet werden können, um beispielsweise Bereiche auf Nutzflächen ausfindig zu machen, in welchen häufig auffällige Sensordaten erfasst werden. In solchen Bereichen von Nutzflächen können beispielsweise besonders viele und/oder besonders große Steine im Boden oder eine stark verdichtete Bodenoberfläche vorliegen, welche bei zukünftigen Bodenbearbeitungsvorgängen erneut unzureichender Arbeitsqualität oder Beschädigungen des Arbeitsgeräts führen könnten. Vorzugsweise können die erfassten Positionsdaten zur Erstellung einer Applikationskarte einer landwirtschaftlichen Nutzfläche und/oder für ein Fahr-Management-System genutzt werden.

In einer anderen bevorzugten Ausführungsform des erfindungsgemäßen Verfahrens umfassen die betriebszustandsabhängigen Folgemaßnahmen das Ermitteln eines Wartungsintervalls für das Arbeitsgerät auf Grundlage der erfassten Sensordaten. Alternativ oder zusätzlich umfassen die betriebszustandsabhängigen Folgemaßnahmen das Anpassen eines Wartungsintervalls für das Arbeitsgerät auf Grundlage der erfassten Sensordaten. Vorzugsweise gibt das Wartungsintervall an, in welchen Zeitintervallen, insbesondere nach welcher Anzahl an Betriebsstunden, das Arbeitsgerät gewartet werden muss. Die Sensordaten können Informationen dazu liefern, wie stark das Arbeitsgerät, insbesondere die Walze, beansprucht wird. Weisen die Sensordaten auf häufige und/oder besonders hohe Belastungen hin, kann der Verschleiß der Walze höher als üblich sein, wodurch die Arbeitsqualität leiden oder die Wahrscheinlichkeit für Beschädigungen steigen kann. Vorzugsweise berechnet die elektronische Datenverarbeitungseinrichtung auf Grundlage der Sensordaten, zu welchem Zeitpunkt und/oder nach welcher Anzahl von Betriebsstunden die nächste Wartung des Arbeitsgeräts fällig ist. Weiterhin kann ein bereits definiertes Wartungsintervall auf Grundlage der Sensordaten nachträglich angepasst werden. Ist die Belastung des Arbeitsgeräts beispielsweise höher als erwartet, muss das Wartungsintervall möglicherweise verkürzt werden.

Es ist zudem ein erfindungsgemäßes Verfahren bevorzugt, bei welchem die betriebszustandsabhängigen Folgemaßnahmen das Prüfen und/oder Korrigieren der erfassten Sensordaten mittels der elektronischen Datenverarbeitungseinrichtung umfassen, wobei die elektronische Datenverarbeitungseinrichtung die erfassten Sensordaten vorzugsweise auf Grundlage eines definierten Sensordatengrenzwertbereichs filtert. Das Korrigieren umfasst vorzugsweise eine digitale Filterung der erfassten Sensordaten, insbesondere mittels eines geeigneten Berechnungsalgorithmus. Beispielsweise können aus den erfassten Sensordaten geringfügige und nicht relevante Krafteinwirkungen auf die Walze herausgefiltert und/oder herausgerechnet werden, sodass die Folgemaßnahmen nicht unerwünscht eingeleitet werden. Das Prüfen und/oder das Korrigieren der Sensordaten können das Definieren eines Toleranzbereichs mit einem unteren und einem oberen Grenzwert für die Sensorsignale umfassen. Vorzugsweise definieren die Grenzwerte einen Sensorgrenzwertbereich, in welchem die Sensordaten auf einen Normalbetrieb ohne Auffälligkeiten hinweisen. Vorzugsweise werden die Grenzwerte so gewählt, dass Krafteinwirkungen auf die Walze, welche auf den Aufstandsdruck der Walze auf den Boden zurückzuführen sind und für eine ausreichende Rückverfestigung des zu bearbeitenden Bodens notwendig ist, nicht zu Folgemaßnahmen führen. Zudem berücksichtigen die Grenzwerte vorzugsweise den Rollwiderstand und/oder den Zugwiderstand der Walze im Normalbetrieb. Die Grenzwerte zum Festlegen des Sensordatengrenzwertbereichs können manuell von einem Bediener des Arbeitsgeräts und/oder automatisch von der Datenverarbeitungseinrichtung auf Grundlage der aktuellen Gegebenheiten, beispielsweise auf Grundlage aktueller Einstellungen des Arbeitsgeräts, wie der Arbeitstiefe der Bodenbearbeitungswerkzeuge und/oder der Fahrgeschwindigkeit, festgelegt und/oder angepasst werden. Ein unterer Grenzwert ist vorzugsweise derart definiert, dass der Anpressdruck der Walze auf den Boden der Nutzfläche eine gewünschte Rückverfestigung des Bodens zur Folge hat, wobei die gewünschte Rückverfestigung von der auf der Nutzfläche kultivierten Nutzpflanze abhängig sein kann. Ein oberer Grenzwert ist vorzugsweise derart definiert, dass die Laufeigenschaften der Walze nicht beeinträchtigt werden, sodass die Walze nicht blockiert und folglich nicht ohne abzurollen über den Boden schleift, wodurch die Arbeitsqualität leiden würde.

Die der Erfindung zugrundeliegende Aufgabe wird weiterhin durch ein landwirtschaftliches Arbeitsgerät nach Anspruch 10 gelöst, wobei das landwirtschaftliche Arbeitsgerät eine sensorische Erfassungseinheit umfasst, welche dazu eingerichtet ist, einen aktuellen Betriebszustand der Walze zu erfassen. Das landwirtschaftliche Arbeitsgerät ist erfindungsgemäß dazu eingerichtet, das Verfahren nach einem der vorstehenden Ansprüche auszuführen. Hinsichtlich weiterer Vorteile und Modifikationen des landwirtschaftlichen Arbeitsgeräts wird daher auf die Vorteile und Modifikationen des zuvor beschriebenen Verfahrens verwiesen.

Vorzugsweise umfasst das Arbeitsgerät eine elektronische Datenverarbeitungseinrichtung zum Auswerten der erfassten Sensordaten. Aus den erfassten Sensordaten können insbesondere der Auflagedruck der Walze auf den Boden einer landwirtschaftlichen Nutzfläche, die Bodenverhältnisse auf der Nutzfläche sowie Verschmutzungen und/oder Beschädigungen der Walze detektiert werden. Vorzugsweise ist die Walze über den Tragarm gelenkig, insbesondere verschwenkbar und/oder drehbar, an dem Trägerrahmen des Arbeitsgeräts befestigt. Vorzugsweise sind der Tragarm und der Trägerrahmen an einem sogenannten Anlenkpunkt beweglich miteinander verbunden. Dadurch, dass die Walze beweglich an dem Arbeitsgerät befestigt ist, ist die Walze relativ zum Arbeitsgerät und/oder relativ zum Boden der Nutzfläche mittels einer Verstelleinrichtung verstellbar, insbesondere zum Anpassen des Auflagedrucks der Walze auf den Boden und/oder der Arbeitstiefe der Bodenbearbeitungswerkzeuge in den Boden, wobei die Arbeitstiefe der Walze und weitere Maschinenparameter, wie die Fahrgeschwindigkeit und/oder der Typ der Bodenbearbeitungswerkzeuge, sowie äußere Einflussfaktoren, wie die Bodenbeschaffenheit, den Aufstandsdruck der Walze auf den Boden beeinflussen können. Um die Arbeitsqualität bei Feststellung von Auffälligkeiten in den Sensordaten aufrechtzuerhalten und/oder um Beschädigungen der Bodenbearbeitungswerkzeuge zu vermeiden, kann die Walze mittels der Verstelleinrichtung in Abhängigkeit der erfassten Sensordaten verstellt werden.

**In** einer bevorzugten Ausführungsform des erfindungsgemäßen landwirtschaftlichen Arbeitsgeräts umfasst das Arbeitsgerät eine Verstelleinrichtung zum Verstellen der Arbeitstiefe von Bodenbearbeitungswerkzeugen des Arbeitsgeräts in den Boden einer landwirtschaftlichen Nutzfläche, wobei der aktuelle Betriebszustand der Walze über eine Zustandsänderung der Verstelleinrichtung mittels der sensorischen Erfassungseinrichtung erfassbar ist. Vorzugsweise kann mittels der Verstelleinrichtung eine Tiefenverstellung zum Anpassen der Arbeitstiefe der Bodenbearbeitungswerkzeuge in den Boden vorgenommen werden. Durch Anpassen der Arbeitstiefe der Bodenbearbeitungswerkzeuge kann der Auflagedruck der Walze auf den Boden und folglich die Rückverfestigung des Bodens beeinflusst werden. Die beabsichtigte Arbeitstiefe der Bodenbearbeitungswerkzeuge in den Boden und/oder die Rückverfestigung des Bodens mittels der Walze sind in der Regel abhängig von einer auf der jeweiligen Nutzfläche kultivierten Nutzpflanze und daher ein pflanzenspezifisch und/oder flächenspezifisch vorgegebener Wert, sodass eine Anpassung der Arbeitstiefe Bodenbearbeitungswerkzeuge nur eine optionale Anpassungsvariante ist.

In einer anderen bevorzugten Ausführungsform des landwirtschaftlichen Arbeitsgeräts ist die Verstelleinrichtung als druckbeaufschlagte Verstelleinrichtung ausgebildet, insbesondere als hydraulische oder pneumatische Verstelleinrichtung, wobei mittels der sensorischen Erfassungseinrichtung ein die Verstelleinrichtung betreffender Druck erfassbar ist. Alternativ oder zusätzlich ist die Verstelleinrichtung als mechanische Verstelleinrichtung ausgebildet, wobei mittels der sensorischen Erfassungseinrichtung eine auf die Verstelleinrichtung wirkende Kraft erfassbar ist. Vorzugsweise ist die Verstelleinrichtung als hydraulische Verstelleinrichtung für die Walze ausgebildet. Vorzugsweise umfasst die hydraulische Verstelleinrichtung zumindest einen Druckzylinder, insbesondere einen Hydraulikzylinder.

Bei einer druckbeaufschlagten Verstelleinrichtung ist die sensorische Erfassungseinrichtung vorzugsweise als Drucksensor ausgebildet oder umfasst die sensorische Erfassungseinrichtung zumindest einen Drucksensor. Vorzugsweise ist der Hydraulikzylinder als doppeltwirkender Hydraulikzylinder ausgebildet, wobei ein doppelt wirkender Hydraulikzylinder zumindest eine Kolbenkammer und zumindest eine Ringkammer umfasst, welche jeweils mit Druck beaufschlagt werden können, um in zwei vorzugsweise einander entgegengerichteter Richtungen Kraft übertragen zu können. Vorzugsweise ist die Erfassungseinrichtung dazu eingerichtet, den Druck in der Kolbenkammer zu erfassen. Vorzugsweise ist die Erfassungseinrichtung dazu eingerichtet, den Druck in der Ringkammer zu erfassen. Vorzugsweise ist in einer elektronischen Datenverarbeitungseinrichtung des Arbeitsgeräts zum Auswerten der erfassten Sensordaten ein Referenzdruck des Hydraulikzylinders hinterlegt, wobei ein erfasster Druck in der Kolbenkammer und/oder in der Ringkammer vorzugsweise mit dem Referenzdruck verglichen wird, um eine Zustandsänderung der Verstelleinrichtung zu erfassen.

Zudem sind in der Datenverarbeitungseinrichtung vorzugsweise die Geometrie des Arbeitsgeräts, insbesondere die Geometrie der Walze, des Tragarms und/oder des Trägerrahmens, betreffende Geometriedaten hinterlegt, mittels welcher aus den erfassten Sensordaten auf die Walze wirkende Kräfte berechenbar sind. Vorzugsweise wird ein Referenzdruck für den Druck in der Ringkammer im ausgehobenen Zustand des Arbeitsgeräts bestimmt, in welchem die Walze keinen Bodenkontakt hat. Im ausgehobenen Zustand wird die Verstelleinrichtung, insbesondere der Hydraulikzylinder, durch die Gewichtskraft der Walze belastet, wobei die Gewichtskraft der Walze von einer Kolbenstange des Hydraulikzylinders über eine Kolbenringfläche auf das Hydrauliköl in der Ringkammer übertragen wird und somit einen Druck in der Ringkammer erzeugt, welcher als Referenzwert hinterlegt werden kann. Auf der Kolbenseite des Hydraulikzylinders wirkt im ausgehobenen Zustand vorzugsweise im Wesentlichen kein Hydraulikdruck. Die Erfassungseinrichtung kann zudem den Hydraulikdruck an einer Position im Hydrauliksystem abseits des Hydraulikzylinders erfassen.

An der Walze anhaftendes Fremdmaterial kann für eine erhöhte Gewichtskraft der Walze sorgen, welche vorzugsweise durch einen Vergleich des Drucks in der Ringkammer mit dem hinterlegten Referenzwert im ausgehobenen Zustand erfassbar ist, da das Fremdmaterial für einen höheren Ringkammerdruck sorgt. Ein niedrigerer Druck in der Ringkammer kann weiterhin auf einen Schaden, schlimmstenfalls auf einen Verlust der Walze, hindeuten. Im nicht ausgehobenen Zustand hat die Walze Bodenkontakt und stützt sich entsprechend auf dem Boden ab, wobei das Abstützen der Walze auf den Boden einen erhöhten Druck in der Kolbenkammer des Hydraulikzylinders und einen Druckabfall in der Ringkammer des Hydraulikzylinders bewirkt. Vorzugsweise wird zusätzlich zu einem Referenzdruck in der Ringkammer ein Referenzdruck in der Kolbenkammer definiert, wobei der Referenzdruck in der Kolbenkammer im nicht ausgehobenen Zustand des Arbeitsgeräts definiert wird. Auf diese Weise kann durch Erfassen des Drucks der Auflagedruck der Walze auf den Boden einer landwirtschaftlichen Nutzfläche mithilfe der Erfassungseinrichtung an der hydraulischen Tiefenverstellung ermittelt werden, wobei ein zu niedriger Auflagedruck darauf hindeuten kann, dass die Arbeitsqualität ungenügend ist und/oder dass die Bodenoberfläche so verdichtet ist, dass eine gewünschte Arbeitstiefe nicht erreicht werden kann und/oder dass die Walze keinen ausreichenden Bodenkontakt erreicht. Die Verstelleinrichtung kann zudem derart ausgebildet und/oder derart an dem Arbeitsgerät angeordnet sein, dass eine erhöhte und eine zu niedrige Gewichtskraft der Walze durch Druckmessungen und/oder einen Referenzdruck in der Kolbenkammer und/oder der Auflagedruck der Walze durch Druckmessungen und/oder einen Referenzdruck in der Ringkammer erfassbar sind.

Zudem kann durch Erfassen des Drucks in dem Hydraulikzylinder die auf die Walze wirkende Kraft in Fahrtrichtung des Arbeitsgeräts ermittelt werden, welche beispielsweise durch den Roll- und/oder Reibungswiderstand der Walze erzeugt wird. Erhöhte Kräfte entgegen der Fahrtrichtung des Arbeitsgerätes können zudem auf den sogenannten Bulldozing-Effekt hinweisen, bei welchem sich Erdmaterial vor der Walze sammelt und von der Walze vor der Walze hergeschoben wird, wodurch Verstopfungen und/oder Beschädigungen der Walze entstehen können. Die Verstelleinrichtung kann zudem als elektrische Verstelleinrichtung ausgebildet sein, wobei das Erfassen des Betriebszustands der Walze durch Erfassen eines elektrischen Stroms oder einer elektrischen Spannung ausgeführt werden kann, wobei aus erfassten Strom- und/oder Spannungswerten vorzugsweise Belastungsdaten und/oder Kraftdaten ableitbar sind, welche Rückschlüsse auf den Betriebszustand der Walze zulassen. Bei einer mechanischen Verstelleinrichtung ist die sensorische Erfassungseinrichtung vorzugsweise als Kraftsensor, insbesondere als Kraftmessbolzen, ausgebildet. Zudem können an dem Arbeitsgerät ein oder mehrere Lagesensoren angeordnet sein, insbesondere ein oder mehrere Drehwinkelsensoren zum Erfassen eines Drehwinkels zwischen dem Tragarm und dem Trägerrahmen an dem Anlenkpunkt und/oder ein oder mehrere Neigungssensoren zum Erfassen einer Neigung der Verstelleinrichtung und/oder des Tragarms und/oder des Trägerrahmens und/oder ein oder mehrere Abstandssensoren zum Erfassen von Abstandsänderungen zwischen Tragarm und Trägerrahmen, wobei über den Drehwinkel und/oder die Neigung und/oder die Abstandsänderung die wirkenden Kräfte ermittelt werden können. Lagesensoren und/oder ein Kraftmessbolzen können auch bei einer hydraulischen Verstelleinrichtung zusätzlich zu dem Drucksensor am Hydraulikzylinder zum Erfassen ergänzender Sensordaten vorgesehen werden.

Es ist ferner ein erfindungsgemäßes landwirtschaftliches Arbeitsgerät vorteilhaft, bei welchem das Arbeitsgerät zumindest zwei Verstelleinrichtungen umfasst und an jeder Verstelleinrichtung zumindest eine sensorische Erfassungseinrichtung angeordnet ist, wobei der aktuelle Betriebszustand der Walze vorzugsweise durch einen Vergleich der mittels der sensorischen Erfassungseinrichtungen erfassten Zustandsänderungen der Verstelleinrichtungen mittels einer elektronischen Datenverarbeitungseinrichtung bestimmbar ist. Vorzugsweise sind die Verstelleinrichtungen quer zur Fahrtrichtung des Arbeitsgeräts beabstandet voneinander und nebeneinander angeordnet. Durch einen Vergleich der erfassten Zustandsänderungen, insbesondere von erfassten Druckänderungen in Hydraulikzylindern der Verstelleinrichtungen, kann ermittelt werden, ob die Walze entlang ihrer Längserstreckung gleichmäßig belastet wird. Wird beispielsweise an einer der beiden Verstelleinrichtungen eine erhöhte Belastung, beispielsweise ein erhöhter Hydraulikdruck, festgestellt, kann dies auf eine asymmetrische Krafteinwirkung auf die Walze hindeuten, beispielsweise durch eine einseitige Verschmutzung oder eine einseitige Beschädigung der Walze oder über die Breite der Walze ungleichmäßige Bodenverhältnisse.

Nachfolgend werden bevorzugte Ausführungsformen der Erfindung unter Bezugnahme auf die beiliegenden Zeichnungen näher erläutert und beschrieben. Dabei zeigen:
- Fig. 1: ein erfindungsgemäßes landwirtschaftliches Arbeitsgerät mit einer Walze in einer Seitenansicht; und
- Fig. 2: eine Detailansicht einer Verstelleinrichtung mit einem schematisch dargestellten Hydraulikzylinder in einer seitlichen Ansicht.

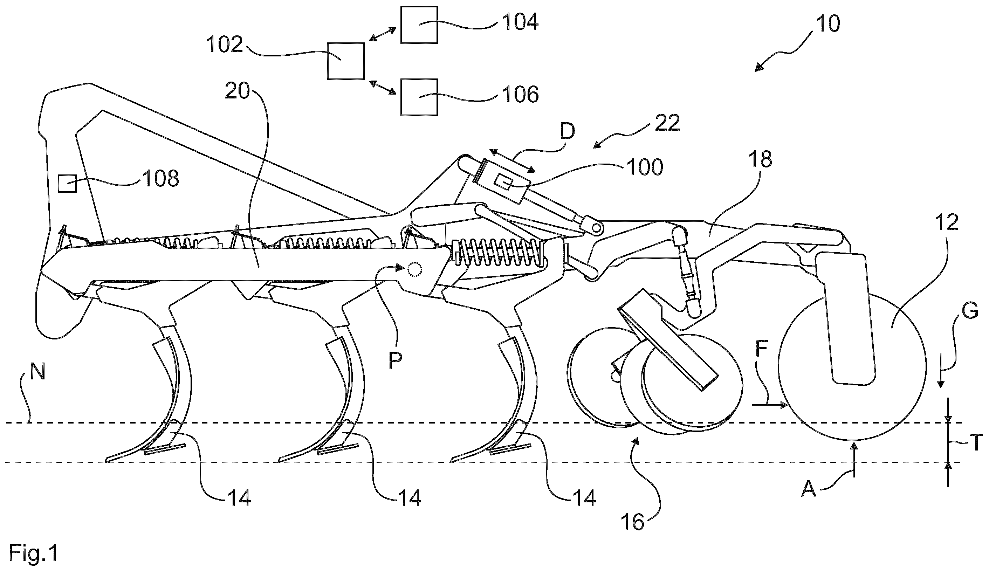

Die Fig. 1 zeigt ein erfindungsgemäßes landwirtschaftliches Arbeitsgerät 10, welches als landwirtschaftlicher Grubber ausgebildet ist. Das Arbeitsgerät 10 umfasst unterschiedliche Bodenbearbeitungswerkzeuge, welche als Schare 14, Scheiben 16 und als Walze 12 ausgebildet und in Fahrtrichtung des Arbeitsgeräts 10 hintereinander und beabstandet zueinander angeordnet sind. Mittels der Schare 14 und der Scheiben 16 kann der Boden einer landwirtschaftlichen Nutzfläche N durch Bodeneingriff aufgebrochen und/oder zerkrümelt werden. Die Walze 12 ist als Reifenpacker mit einem oder mehreren Packerreifen und/oder Fahrwerksreifen ausgebildet und dient beispielsweise der Rückverfestigung des aufgelockerten Bodens der landwirtschaftlichen Nutzfläche N und/oder der Tiefenführung der Bodenbearbeitungswerkzeuge, insbesondere der Schare 14. **In** anderen Ausführungsformen des Arbeitsgeräts 10 kann die Walze 12 zudem andersartig ausgebildet sein, beispielsweise als Stabwalze, Tandemwalze, Profilwalze oder Keilringwalze. Das landwirtschaftliche Arbeitsgerät 10 umfasst einen Trägerrahmen 20 sowie einen Tragarm 18. Die Schare 14 sind an dem Trägerrahmen 20 des Arbeitsgeräts 10 angeordnet. Die Scheiben 16 und die Walze 12 sind an dem Tragarm 18 des Arbeitsgeräts 10 angeordnet. Der Tragarm 18 ist in einem Anlenkpunkt P gelenkig an dem Trägerrahmen 20 des Arbeitsgerätes 10 befestigt. Durch die gelenkige Befestigung des Tragarms 18 über den Anlenkpunkt P an dem Trägerrahmen 20 des Arbeitsgeräts ist der Tragarm 18 in dem Anlenkpunkt P um eine Drehachse drehbar und/oder um eine Schwenkachse schwenkbar. Die Drehachse und/oder die Schwenkachse verläuft vorzugsweise senkrecht zur Fahrtrichtung des Arbeitsgeräts 10.

Weiterhin umfasst das Arbeitsgerät 10 eine Verstelleinrichtung 22, mittels welcher der Tragarm 18 um den Anlenkpunkt P verdrehbar und/oder verschwenkbar ist. Die Verstelleinrichtung 22 ist als hydraulische Verstelleinrichtung ausgebildet, wobei die hydraulische Verstelleinrichtung 22 einen Hydraulikzylinder umfasst, welcher an ein Hydrauliksystem des Arbeitsgeräts 10 und/oder an ein Hydrauliksystem eines nicht dargestellten Zug- oder Trägerfahrzeugs für das Arbeitsgerät 10 anschließbar und auf diese Weise mit Hydraulikdruck versorgbar ist. Mittels der Verstelleinrichtung 22 ist der Tragarm 18 durch eine Veränderung des Drucks D in dem Hydraulikzylinder der Verstelleinrichtung 22 relativ zum Trägerrahmen 20 und/oder relativ zum Boden der landwirtschaftlichen Nutzfläche N um den Anlenkpunkt P verstellbar, insbesondere verschwenkbar und/oder verdrehbar. Insbesondere ist die Walze 12 des Arbeitsgerätes 10, welche an dem verschwenkbaren Tragarm 18 angeordnet ist, mittels der Verstelleinrichtung 22 verstellbar. Auf diese Weise können insbesondere die Arbeitstiefe T der Schare 14 und/oder der Auflagedruck A der Walze 12 beeinflusst werden. Für eine gewünschte Bearbeitung des Bodens der landwirtschaftlichen Nutzfläche N wird mittels der Verstelleinrichtung 22 die Walze 12 derart eingestellt, dass sich eine beabsichtigte Arbeitstiefe T der Schare 14 einstellt, wobei die Arbeitstiefe T ein pflanzenspezifischer und/oder flächenspezifischer Parameter sein kann, welcher vorgibt, wie tief die Schare 14 in den Boden der landwirtschaftlichen Nutzfläche N eindringen. Außerdem wird mittels der Verstelleinrichtung 22 der Auflagedruck A der Walze 12 auf dem Boden der Nutzfläche N beeinflusst, wobei der Auflagedruck A definiert, mit welcher Kraft die Walze 12 auf den Boden der Nutzfläche N drückt. Der Auflagedruck A ergibt sich üblicherweise aus der Einstellung der Arbeitstiefe T sowie aus unterschiedlichen weiteren äußeren Parametern, wie beispielsweise der Bodenbeschaffenheit.

Zudem umfasst das Arbeitsgerät 10 eine sensorische Erfassungseinrichtung 100, welche an der Verstelleinrichtung 22 angeordnet und dazu eingerichtet ist, den Druck D im Hydraulikzylinder der Verstelleinrichtung 22 sensorisch zu erfassen. Insbesondere ist die Erfassungseinrichtung 100 als Drucksensor ausgebildet und dazu eingerichtet, Druckänderungen des Drucks D im Hydraulikzylinder der Verstelleinrichtung 22 zu detektieren. Abweichungen des Drucks D von hinterlegten Referenzwerten und/oder plötzliche unerwartete Druckänderungen können beispielsweise auf unerwünschte auf die Walze 12 wirkende äußere Kräfte und/oder fehlerhafte Maschineneinstellungen, beispielsweise eine nicht korrekte Arbeitstiefe T und/oder eine nicht korrekte Einstellung des Auflagedrucks A hinweisen. Eine entgegen der Fahrtrichtung auf die Walze 12 wirkende Kraft F, welche ein Drehmoment um den Anlenkpunkt P erzeugt, würde beispielsweise eine Druckerhöhung des Drucks D1 in einer Kolbenkammer des Hydraulikzylinders der Verstelleinrichtung 22 bewirken. Eine entgegen der Fahrtrichtung des Arbeitsgeräts 10 wirkende Kraft F auf die Walze 12 kann beispielsweise durch einen Erdwall, welchen die Walze 12 unbeabsichtigt vor sich herschiebt, entstehen (Bulldozing-Effekt), wobei durch eine gemessene Kraft F zudem die Rolleigenschaften der Walze 12 ableitbar sein können, sodass beispielsweise festgestellt werden kann, ob die Walze 12 wie gewünscht über die Nutzfläche N rollt oder aufgrund von Verstopfungen oder durch die vorherrschende Bodenbeschaffenheit blockiert ist und über den Boden schleift statt frei zu rollen.

Fremdmaterial, welches die Walze 12 verstopfen kann, ist über eine Änderung der Gewichtskraft G und/oder eine Abweichung von einem Referenzwert der Gewichtskraft G der Walze 12 und die sich dadurch einstellenden Druckverhältnisse des Drucks D in der Verstelleinrichtung 22 detektierbar. Um eine gleichbleibende Arbeitsqualität des Arbeitsgeräts 10 sicherzustellen, sind eine gleichbleibende Arbeitstiefe T sowie ein möglichst konstanter Auflagedruck A auf den Boden der Nutzfläche N bevorzugt, wobei auf die Walze wirkende Kräfte F, beispielsweise durch den Bulldozing-Effekt, sowie eine erhöhte Gewichtskraft G durch Fremdmaterialien an der Walze 12 zu erhöhtem Verschleiß, Beschädigungen und/oder verminderter Arbeitsqualität der Walze 12 führen können. Mittels der Erfassungseinrichtung 100 an der Verstelleinrichtung 22 können über Änderungen des Drucks D im Hydraulikzylinder der Verstelleinrichtung 22 sich ändernde und/oder auffällige Belastungszustände an der Walze 12, welche auf eine verminderte Arbeitsqualität und/oder Beschädigungen der Walze 12 hindeuten können, frühzeitig erkannt und Gegenmaßnahmen, beispielsweise eine Veränderung der Maschineneinstellungen und/oder ein Verlangsamen des Bodenbearbeitungsvorgangs, ergriffen werden.

Des Weiteren umfasst das Arbeitsgerät 10 eine Datenverarbeitungseinrichtung 102. Die Datenverarbeitungseinrichtung 102 kann an dem Arbeitsgerät 10 angeordnet sein. Zudem kann die Datenverarbeitungseinrichtung 102 an einem Zug- oder Trägerfahrzeug für das Arbeitsgerät 10, beispielsweise als Bestandteil eines Bedienterminals für das Arbeitsgerät 10 und/oder für das Zug- oder Trägerfahrzeug, angeordnet sein. Die sensorische Erfassungseinrichtung 100 ist vorzugsweise signalleitend beispielsweise per Kabel und/oder kabellos mit der Datenverarbeitungseinrichtung 102 verbunden. Die Datenverarbeitungseinrichtung 102 ist dazu eingerichtet, die mittels der Erfassungseinrichtung 100 erfassten Sensordaten, insbesondere erfasste Drücke D, D1, D2 in der Verstelleinrichtung 22, zu empfangen und auszuwerten. Vorzugsweise ist die Datenverarbeitungseinrichtung 102 dazu eingerichtet, von den Sensordaten abhängige Folgemaßnahmen abzuleiten. Die mittels der Datenverarbeitungseinrichtung 102 abzuleitenden Folgemaßnahmen sind insbesondere abhängig von einem aktuellen und/oder von einem zukünftig zu erwartenden Belastungszustand an der Walze 12, insbesondere von an der Walze 12 wirkenden Kräften F und/oder eines an der Walze 12 vorliegenden Auflagedrucks A auf dem Boden der Nutzfläche N.

Weisen die von der Erfassungseinrichtung 100 erfassten Sensordaten beim Auswerten mittels der Datenverarbeitungseinrichtung 102 darauf hin, dass beispielsweise zu hohe Kräfte F und/oder unerwünschte Auflagedrücke A auf die Walze 12 wirken, kann dies beispielsweise auf Beschädigungen der Walze 12 und/oder Abweichungen von einem gewünschten Arbeitsergebnis des Arbeitsgeräts 10 hindeuten. Folglich leitet die Datenverarbeitungseinrichtung 102 aus den erfassten Sensordaten, welche Auffälligkeiten aufweisen, Folgemaßnahmen ab, welche eine gleichbleibend hohe Arbeitsqualität des Arbeitsgeräts 10 und das Vermeiden von Beschädigungen und/oder erhöhtem Verschleiß der Walze 12 sicherstellen. Folgemaßnahmen können beispielsweise das Ableiten von Warnhinweisen und/oder Bedienungsempfehlungen und/oder das Ableiten von Steuerungsvorgaben für das Arbeitsgerät 10 und/oder für das Zug- oder Trägerfahrzeug für das Arbeitsgerät 10 sein. Warnhinweise und/oder Bedienungsempfehlungen können von der Datenverarbeitungseinrichtung 102 beispielsweise an eine Anzeigevorrichtung, welche Bestandteil eines Bedienterminals sein kann, übertragen werden, sodass diese Warnhinweise und/oder Bedienungsempfehlungen einem Maschinenbediener angezeigt werden, welcher daraufhin weitere Folgemaßnahmen einleiten kann.

Von der Datenverarbeitungseinrichtung 102 auf Grundlage der Sensordaten abgeleitete Steuerungsvorgaben können an eine Steuereinheit 104 des Arbeitsgeräts 10 und/oder an eine Steuerungseinrichtung 106 eines Zug- und/oder Trägerfahrzeugs für das Arbeitsgerät 10 übermittelt werden. Die Steuereinheit 104 kann an dem Arbeitsgerät 10 angeordnet und dazu eingerichtet sein, das Arbeitsgerät 10 auf Grundlage der von der Datenverarbeitungseinrichtung 102 abgeleiteten Steuerungsvorgaben, insbesondere automatisch oder auf Bedieneranweisungen hin zumindest teilautomatisch, zu steuern. Die Steuerungseinrichtung 106 kann an einem Zug- oder Trägerfahrzeug für das Arbeitsgerät 10 angeordnet und/oder Bestandteil eines Bedienterminals des Zug- oder Trägerfahrzeugs und dazu eingerichtet sein, das Zug- oder Trägerfahrzeug auf Grundlage der mittels der Datenverarbeitungseinrichtung 102 abgeleiteten Steuerungsvorgaben zu steuern. Die Steuerungsvorgaben betreffen insbesondere das Anpassen unterschiedlicher Maschinenparameter des Zug- oder Trägerfahrzeugs und/oder des Arbeitsgeräts 10. Ergeben die mittels der Erfassungseinrichtung 100 erfassten Sensordaten beispielsweise, dass auffällig hohe Kräfte F auf die Walze 12 wirken, kann die Datenverarbeitungseinrichtung 102 Steuerungsvorgaben an die Steuereinheit 104 des Arbeitsgerätes 10 senden, welche das Anpassen von Maschinenparametern des Arbeitsgeräts 10, beispielsweise ein Verschwenken der Walze 12 mittels der Verstelleinrichtung 22 zum Einstellen der Arbeitstiefe T betreffen. Außerdem kann die Steuereinheit 104 das Ausheben der Walze 12 zum Aufheben des Bodenkontakts bewirken, sodass beispielsweise anhaftendes Fremdmaterial durch einen Reinigungsvorgang entfernt werden kann. Die Datenverarbeitungseinrichtung 102 kann alternativ oder zusätzlich Steuerungsvorgaben an die Steuerungseinrichtung 106 des Zug- und/oder Trägerfahrzeugs für das Arbeitsgerät 10 senden, welche das Verlangsamen und/oder das Stoppen des Bodenbearbeitungsvorgangs betreffen, um eine verminderte Arbeitsqualität zu vermeiden.

Ferner umfasst das Arbeitsgerät 10 eine Positionserfassungseinrichtung 108, mittels welcher die Geo-Position des Arbeitsgeräts während eines Bodenbearbeitungsvorgangs auf der Nutzfläche N erfasst werden kann. Insbesondere bei auffälligen Sensordaten und/oder bei Ergreifen von Folgemaßnahmen kann die Geo-Position auf einem Datenspeicher gespeichert werden, sodass auch im Anschluss an einen Bodenbearbeitungsvorgang nachvollziehbar ist, in welchen Bereichen der Nutzfläche N möglicherweise unzureichende Arbeitsqualität des Arbeitsgeräts 10 vorgelegen hat, um dort beispielsweise nacharbeiten zu können.

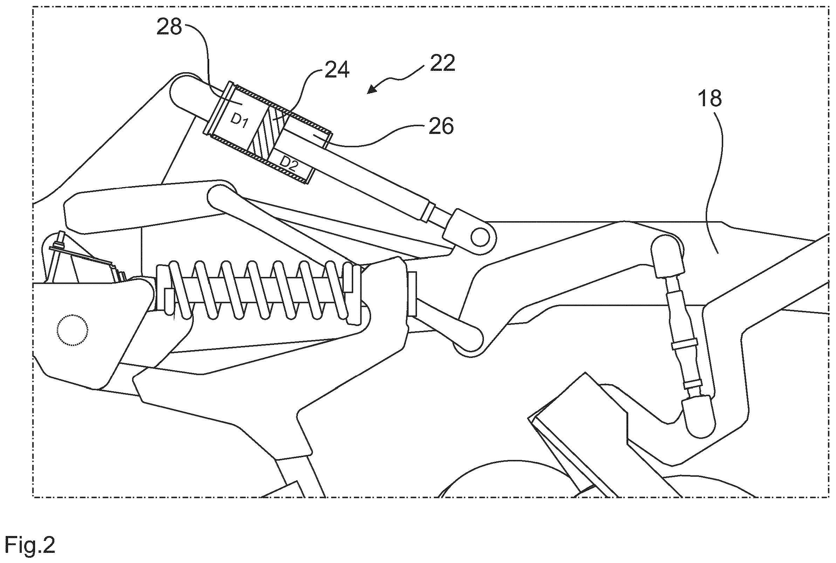

Die Fig. 2 zeigt eine Detailansicht der Verstelleinrichtung 22 des Arbeitsgeräts 10, wobei in der Fig. 2 ein schematischer Querschnitt durch den Hydraulikzylinder der Verstelleinrichtung 22 zu sehen ist. Die hydraulische Verstelleinrichtung 22 umfasst einen doppeltwirkenden Hydraulikzylinder, welcher eine Ringkammer 26 und eine Kolbenkammer 28 umfasst. Die Ringkammer 26 und die Kolbenkammer 28 der hydraulischen Verstelleinrichtung 22 sind durch den Kolben 24 räumlich voneinander getrennt, wobei sich der Kolben 24 durch den doppeltwirkenden Aufbau der Verstelleinrichtung 22 durch gezieltes Aufbauen eines Drucks D1 in der Kolbenkammer 28 und eines Drucks D2 in der Ringkammer 26 entlang der Längserstreckung der Verstelleinrichtung 22 in beide Richtungen verfahren lässt.

Vorzugsweise ist die Erfassungseinrichtung 100 dazu eingerichtet, sowohl den Druck D1 in der Kolbenkammer 28 als auch den Druck D2 in der Ringkammer 26 der Verstelleinrichtung 22 zu erfassen. Wird beispielsweise der Druck D1 in der Kolbenkammer 28 der Verstelleinrichtung 22 erhöht, verfährt der Kolben 24 in Richtung der Ringkammer 26, sodass der Tragarm 18 gemeinsam mit der Walze 12 in Richtung des Bodens der Nutzfläche N verschwenkt wird, sodass die Arbeitstiefe T der Schare 14 reduziert wird. Der Auflagedruck A der Walze 12 wird folglich ebenfalls reduziert. Wird der Druck D2 in der Ringkammer 26 der Verstelleinrichtung 22 erhöht, verfährt der Kolben in die entgegengesetzte Richtung, sodass der Tragarm 18 nach oben verschwenkt wird, sodass die Arbeitstiefe T der Schare 14 und folglich der Auflagedruck A der Walze erhöht werden oder der Bodenkontakt der Walze 12 durch Ausheben der Walze 12 vollständig aufgehoben wird.

Zum Ableiten von Folgemaßnahmen mittels der Datenverarbeitungseinrichtung 102 können Referenzdruckwerte für den Druck D1 in der Kolbenkammer und/oder den Druck D2 in der Ringkammer vordefiniert werden. Vorzugsweise werden Referenzdrücke im Normalzustand der Walze 12, also an einer intakten und sauberen Walze 12 ohne anhaftendes Fremdmaterial, und/oder im Normalbetrieb der Walze 12, also bei einem beabsichtigten auflagedruck A und/oder einer beabsichtigten Arbeitstiefe T, beispielsweise im Rahmen einer Kalibrierfahrt ermittelt, wobei Referenzdruckwerte außerdem manuell von einem Maschinenbediener vorgegeben werden können. Weichen während eines Bodenbearbeitungsvorgangs gemessene Drücke D1, D2, welche sich aus den Sensordaten der Erfassungseinrichtung 100 ergeben, von den hinterlegten Referenzdrücken ab, kann dies darauf hindeuten, dass zum Vermeiden von Beschädigungen und/oder zum Aufrechterhalten der Arbeitsqualität in den Bodenbearbeitungsvorgang eingegriffen werden muss.

Vorzugsweise wird der Referenzdruck D2 in der Ringkammer 26 in einem ausgehobenen Zustand der Walze 12 ermittelt, in welchem die Walze 12 keinen Kontakt zum Boden der Nutzfläche N hat. Im Normalzustand der Walze 12, in welchem die Walze 12 unbeschädigt ist und kein Fremdmaterial an der Walze 12 anhaftet, bewirkt die Gewichtskraft G der Walze 12 einen definierten Druck D2 in der Ringkammer 26, welcher als Referenzdruck, von welchem Abweichungen unerwünscht sind, hinterlegt und beispielsweise auf einem Datenspeicher der Datenverarbeitungseinrichtung 102 hinterlegt und als Vergleichswert herangezogen werden kann.

Ein Referenzdruck für den Druck D1 in der Kolbenkammer 28 wird vorzugsweise im nicht ausgehobenen Zustand der Walze 12, in welchem die Walze 12 Bodenkontakt zu dem Boden der Nutzfläche N aufweist, aus welchem sich eine gewünschte Rückverfestigung und/oder eine gewünschte Arbeitstiefe T der Schare 14 in den Boden der landwirtschaftlichen Nutzfläche N ergibt, ermittelt. Durch den Bodenkontakt der Walze 12 und den sich durch die Arbeitstiefe T einstellenden Auflagedruck A der Walze auf den Boden der Nutzfläche N stellt sich ein im Normalzustand vorherrschender Druck D1 in der Kolbenkammer 28 der Verstelleinrichtung 22 ein. Abweichungen während eines Bodenbearbeitungsvorgangs von dem hinterlegten Referenzdruck in der Kolbenkammer 28 können beispielsweise durch Hindernisse im Boden, beispielsweise Steine, ungleichmäßige Bodenverhältnisse, wie beispielsweise ein stark verdichteter Boden oder Verstopfungen der Walze 12 verursachen. Durch einen Vergleich eines sich aus den Sensordaten ergebenden Drucks D1 in der Kolbenkammer 28 während des Bodenbearbeitungsvorgangs mit dem gespeicherten Referenzdruck mittels der Datenverarbeitungseinrichtung 102 kann ermittelt werden, ob Folgemaßnahmen mittels der Steuereinheit 104 und/oder der Steuerungseinrichtung 106 eingeleitet werden müssen.

### Bezugszeichen

- 10: Arbeitsgerät
- 12: Walze
- 14: Schare
- 16: Scheiben
- 18: Tragarm
- 20: Trägerrahmen
- 22: Verstelleinrichtung
- 24: Kolben
- 26: Ringkammer
- 28: Kolbenkammer

- 100: Erfassungseinrichtung
- 102: Datenverarbeitungseinrichtung
- 104: Steuereinheit
- 106: Steuerungseinrichtung
- 108: Positionserfassungseinrichtung

- A: Auflagedruck
- D, D1, D2: Druck
- F: Kraft
- G: Gewichtskraft
- N: Nutzfläche
- P: Anlenkpunkt
- T: Arbeitstiefe

## Patentansprüche

1. Verfahren zum Betreiben eines landwirtschaftlichen Arbeitsgeräts (10), insbesondere eines landwirtschaftlichen Grubbers und/oder einer landwirtschaftlichen Sämaschine, mit den Schritten:
- Erfassen von einen aktuellen Betriebszustand einer Walze (12) des landwirtschaftlichen Arbeitsgeräts (10) betreffenden Sensordaten mittels zumindest einer sensorischen Erfassungseinrichtung (100);
- Auswerten der erfassten Sensordaten zum Veranlassen von betriebszustandsabhängigen Folgemaßnahmen mittels einer elektronischen Datenverarbeitungseinrichtung (102).
**dadurch gekennzeichnet, dass** die betriebszustandsabhängigen Folgemaßnahmen
- das Berechnen von dem Gewicht und/oder die Gewichtskraft (G) der Walze (12) betreffenden Gewichtsdaten auf Grundlage der erfassten Sensordaten; und
- das Ermitteln der Präsenz von an der Walze (12) anhaftendem Fremdmaterial auf Grundlage der berechneten Gewichtsdaten und/oder der erfassten Sensordaten
umfassen.

2. Verfahren nach Anspruch 1,
**dadurch gekennzeichnet, dass** die betriebszustandsabhängigen Folgemaßnahmen
- das Berechnen von auf die Walze (12) wirkenden Zug- und/oder Druckkräften betreffende Kraftdaten auf Grundlage der erfassten Sensordaten; und/oder
- das Berechnen von den Auflagedruck (A) der Walze (12) auf den Boden einer landwirtschaftlichen Nutzfläche (N) betreffenden Auflagedruckdaten auf Grundlage der erfassten Sensordaten; und/oder
- das Übermitteln der erfassten Sensordaten und/oder der berechneten Kraftdaten und/oder der berechneten Auflagedruckdaten von der elektronischen Datenverarbeitungseinrichtung (102) an eine elektronische Steuereinheit (104) des Arbeitsgeräts (10) und/oder an eine elektronische Steuerungseinrichtung (106) eines Zug- und/oder Trägerfahrzeugs für das Arbeitsgerät (10); und/oder
- das Anzeigen der erfassten Sensordaten und/oder der berechneten Kraftdaten und/oder der berechneten Auflagedruckdaten mittels einer elektronischen Anzeigeeinrichtung; und/oder
- das Speichern der erfassten Sensordaten und/oder der berechneten Kraftdaten und/oder der berechneten Auflagedruckdaten auf einem elektronischen Datenspeicher der Datenverarbeitungseinrichtung (102) und/oder der Steuereinheit (104) und/oder der Steuerungseinrichtung (106) und/oder auf einem externen elektronischen Datenspeicher;
umfassen.

3. Verfahren nach Anspruch 1 oder 2,
**dadurch gekennzeichnet, dass** die betriebszustandsabhängigen Folgemaßnahmen
- das Berechnen des Gewichts und/oder der Gewichtskraft (G) des an der Walze (12) anhaftenden Fremdmaterials auf Grundlage der erfassten Sensordaten und/oder der berechneten Gewichtsdaten; und/oder
- das Übermitteln der berechneten Gewichtsdaten und/oder des berechneten Gewichts und/oder der berechneten Gewichtskraft (G) des an der Walze (12) anhaftenden Fremdmaterials von der elektronischen Datenverarbeitungseinrichtung (102) an eine elektronische Steuereinheit (104) des Arbeitsgeräts (10) und/oder an eine elektronische Steuerungseinrichtung (106) eines Zug- und/oder Trägerfahrzeugs für das Arbeitsgerät (10); und/oder
- das Anzeigen eines die Präsenz von an der Walze (12) anhaftendem Fremdmaterial betreffenden Bedienerhinweises und/oder der berechneten Gewichtsdaten und/oder des berechneten Gewichts und/oder der berechneten Gewichtskraft (G) des an der Walze (12) anhaftenden Fremdmaterials mittels einer elektronischen Anzeigeeinrichtung; und/oder
- das Speichern der berechneten Gewichtsdaten und/oder des berechneten Gewichts und/oder der berechneten Gewichtskraft (G) des an der Walze (12) anhaftenden Fremdmaterials auf einem elektronischen Datenspeicher der Datenverarbeitungseinrichtung (102) und/oder der Steuereinheit (104) und/oder der Steuerungseinrichtung (106) und/oder auf einem externen elektronischen Datenspeicher;
umfassen.

4. Verfahren nach einem der vorstehenden Ansprüche,
**dadurch gekennzeichnet, dass** die betriebszustandsabhängigen Folgemaßnahmen
- das Ableiten von einen Betriebszustand und/oder Belastungszustand der Walze (12) betreffenden Warnhinweisen auf Grundlage der erfassten Sensordaten mittels der elektronischen Datenverarbeitungseinrichtung (102); und/oder
- das Ableiten von der Bedienung und/oder das Einstellen des Arbeitsgeräts (10) und/oder der Walze (12) betreffenden Bedienungsempfehlungen auf Grundlage der erfassten Sensordaten mittels der elektronischen Datenverarbeitungseinrichtung (102); und/oder
- das Übermitteln der Warnhinweise und/oder der Bedienungsempfehlungen von der elektronischen Datenverarbeitungseinrichtung (102) an eine elektronische Steuereinheit (104) des Arbeitsgeräts (10) und/oder an eine elektronische Steuerungseinrichtung (106) eines Zug- und/oder Trägerfahrzeugs für das Arbeitsgerät (10); und/oder
- das Anzeigen der Warnhinweise und/oder der Bedienungsempfehlungen mittels einer elektronischen Anzeigeeinrichtung;
umfassen.

5. Verfahren nach einem der vorstehenden Ansprüche,
**dadurch gekennzeichnet, dass** die betriebszustandsabhängigen Folgemaßnahmen
- das Ableiten von Steuerungsvorgaben zum Steuern des Arbeitsgeräts (10) und/oder des Zug- und/oder Trägerfahrzeugs für das Arbeitsgerät (10) für einen aktuellen Bodenbearbeitungsvorgang und/oder für zukünftige Bodenbearbeitungsvorgänge auf einer landwirtschaftlichen Nutzfläche (N) auf Grundlage der erfassten Sensordaten mittels der elektronischen Datenverarbeitungseinrichtung (102); und/oder
- das Übermitteln der Steuerungsvorgaben von der elektronischen Datenverarbeitungseinrichtung (102) an die elektronische Steuereinheit (104) des Arbeitsgeräts (10) und/oder an die elektronische Steuerungseinrichtung (106) eines Zug- und/oder Trägerfahrzeugs für das Arbeitsgerät (10); und/oder
- das Speichern der Steuerungsvorgaben auf einem elektronischen Datenspeicher der Datenverarbeitungseinrichtung (102) und/oder der Steuereinheit (104) und/oder der Steuerungseinrichtung (106) und/oder auf einem externen elektronischen Datenspeicher;
- das Auslesen der Steuerungsvorgaben aus dem elektronischen Datenspeicher der Datenverarbeitungseinrichtung (102) und/oder der Steuereinheit (104) und/oder der Steuerungseinrichtung (106) und/oder aus dem externen elektronischen Datenspeicher; und/oder
- das Steuern des Arbeitsgeräts (10) während eines Bodenbearbeitungsvorgangs mittels der elektronischen Steuereinheit (104) und/oder des Zug- oder Trägerfahrzeugs des Arbeitsgeräts (10) mittels der elektronischen Steuerungseinrichtung (106) auf Grundlage der Steuerungsvorgaben;
umfassen.

6. Verfahren nach Anspruch 5,
**dadurch gekennzeichnet, dass** die Steuerungsvorgaben
- das Anpassen der Arbeitstiefe (T) von Bodenbearbeitungswerkzeugen des Arbeitsgeräts (10) in den Boden einer landwirtschaftlichen Nutzfläche (N) mittels einer Verstelleinrichtung (22) für die Walze (12); und/oder
- das Ausheben der Walze (12) und/oder des Arbeitsgeräts (10) zum Aufheben des Bodenkontakts der Walze (12) mit dem Boden der landwirtschaftlichen Nutzfläche (N) mittels einer Aushubeinrichtung; und/oder
- das Verlangsamen und/oder Unterbrechen des Bodenbearbeitungsvorgangs mittels des Arbeitsgeräts (10); und/oder
- das Durchführen eines Reinigungsvorgangs zum Reinigen der Walze (12) von anhaftenden Fremdmaterialien;
betreffen.

7. Verfahren nach einem der vorstehenden Ansprüche,
**dadurch gekennzeichnet, dass** die betriebszustandsabhängigen Folgemaßnahmen
- das Erfassen von die Geo-Position des Arbeitsgeräts (10) betreffenden Positionsdaten während des Bodenbearbeitungsvorgangs, insbesondere in Abhängigkeit der erfassten Sensordaten, mittels einer elektronischen Positionserfassungseinrichtung (108); und/oder
- das Abspeichern der erfassten Positionsdaten auf dem elektronischen Datenspeicher der Datenverarbeitungseinrichtung (102) und/oder der Steuereinheit (104) und/oder der Steuerungseinrichtung (106) und/oder auf dem externen elektronischen Datenspeicher;
umfassen.

8. Verfahren nach einem der vorstehenden Ansprüche,
**dadurch gekennzeichnet, dass** die betriebszustandsabhängigen Folgemaßnahmen
- das Ermitteln eines Wartungsintervalls für das Arbeitsgerät (10) auf Grundlage der erfassten Sensordaten; und/oder
- das Anpassen eines Wartungsintervalls für das Arbeitsgerät (10) auf Grundlage der erfassten Sensordaten;
umfassen.

9. Verfahren nach einem der vorstehenden Ansprüche,
**dadurch gekennzeichnet, dass** die betriebszustandsabhängigen Folgemaßnahmen das Prüfen und/oder Korrigieren der erfassten Sensordaten mittels der elektronischen Datenverarbeitungseinrichtung (102) umfassen, wobei die elektronische Datenverarbeitungseinrichtung (102) die erfassten Sensordaten vorzugsweise auf Grundlage eines definierten Sensordatengrenzwertbereichs filtert.

10. Landwirtschaftliches Arbeitsgerät (10), insbesondere landwirtschaftlicher Grubber und/oder landwirtschaftliche Sämaschine, mit
- einer Walze (12), welche über zumindest einen Tragarm (18) an einem Trägerrahmen (20) des Arbeitsgeräts (10) befestigt ist;
umfassend zumindest eine sensorische Erfassungseinrichtung (100), welche dazu eingerichtet ist, einen aktuellen Betriebszustand der Walze (12) zu erfassen, wobei das ladwirtschaftliche Arbeitsgerät eingerichtet ist, zum
- Auswerten der erfassten Sensordaten zum Veranlassen von betriebszustandsabhängigen Folgemaßnahmen mittels einer elektronischen Datenverarbeitungseinrichtung (102).
**dadurch gekennzeichnet, dass** die betriebszustandsabhängigen Folgemaßnahmen
- das Berechnen von dem Gewicht und/oder die Gewichtskraft (G) der Walze (12) betreffenden Gewichtsdaten auf Grundlage der erfassten Sensordaten; und
- das Ermitteln der Präsenz von an der Walze (12) anhaftendem Fremdmaterial auf Grundlage der berechneten Gewichtsdaten und/oder der erfassten Sensordaten
umfassen.

11. Landwirtschaftliches Arbeitsgerät (10) nach Anspruch 10,
**dadurch gekennzeichnet, dass** das Arbeitsgerät (10) eine Verstelleinrichtung (22) zum Verstellen der Arbeitstiefe (T) von Bodenbearbeitungswerkzeugen des Arbeitsgeräts (10) in den Boden einer landwirtschaftlichen Nutzfläche (N) umfasst, wobei der aktuelle Betriebszustand der Walze (12) über eine Zustandsänderung der Verstelleinrichtung (22) mittels der sensorischen Erfassungseinrichtung (100) erfassbar ist.

12. Landwirtschaftliches Arbeitsgerät (10) nach Anspruch 11,
**dadurch gekennzeichnet, dass** die Verstelleinrichtung (22)
- als druckbeaufschlagte Verstelleinrichtung (22), insbesondere als hydraulische oder pneumatische Verstelleinrichtung (22), ausgebildet ist, wobei mittels der sensorischen Erfassungseinrichtung (100) ein die Verstelleinrichtung (22) betreffender Druck (D1, D2) erfassbar ist; oder
- als mechanische Verstelleinrichtung (12) ausgebildet ist, wobei mittels der sensorischen Erfassungseinrichtung (100) eine auf die Verstelleinrichtung (22) wirkende Kraft erfassbar ist.

13. Landwirtschaftliches Arbeitsgerät (10) nach einem der Ansprüche 10 bis 12,
**dadurch gekennzeichnet, dass** das Arbeitsgerät (10) zumindest zwei Verstelleinrichtungen (22) umfasst und an jeder Verstelleinrichtung (22) zumindest eine sensorische Erfassungseinrichtung (100) angeordnet ist, wobei der aktuelle Betriebszustand der Walze (12) vorzugsweise durch einen Vergleich der mittels der sensorischen Erfassungseinrichtungen (100) erfassten Zustandsänderungen der Verstelleinrichtungen (22) mittels einer elektronischen Datenverarbeitungseinrichtung (102) bestimmbar ist.

## Claims

1. Method for operating an agricultural implement (10), in particular an agricultural cultivator and/or an agricultural seed drill, comprising the steps of:
- capturing sensor data relating to a current operating state of a roller (12) of the agricultural implement (10) by means of at least one sensor-based capturing device (100);
- evaluating, by means of an electronic data processing device (102), the captured sensor data to initiate operating state-dependent follow-up actions,
**characterized in that** the operating state-dependent follow-up actions comprise
- calculating weight data relating to the weight and/or the gravitational force (G) of the roller (12) on the basis of the captured sensor data; and
- determining the presence of foreign material adhering to the roller (12) on the basis of the calculated weight data and/or the captured sensor data.

2. Method according to claim 1,
**characterized in that** the operating state-dependent follow-up actions comprise
- calculating force data relating to tensile and/or compressive forces acting on the roller (12) on the basis of the captured sensor data; and/or
- calculating contact pressure data relating to the contact pressure (A) of the roller (12) on the soil of an agricultural area (N) on the basis of the captured sensor data; and/or
- transmitting the captured sensor data and/or the calculated force data and/or the calculated contact pressure data from the electronic data processing device (102) to an electronic control unit (104) of the implement (10) and/or to an electronic control device (106) of a towing and/or carrier vehicle for the implement (10); and/or
- displaying, by means of an electronic display device, the captured sensor data and/or the calculated force data and/or the calculated contact pressure data; and/or
- storing the captured sensor data and/or the calculated force data and/or the calculated contact pressure data on an electronic data storage device of the data processing device (102) and/or the control unit (104) and/or the control device (106) and/or on an external electronic data storage device.

3. Method according to claim 1 or 2,
**characterized in that** the operating state-dependent follow-up actions comprise
- calculating the weight and/or gravitational force (G) of the foreign material adhering to the roller (12) on the basis of the captured sensor data and/or the calculated weight data; and/or
- transmitting the calculated weight data and/or the calculated weight and/or the calculated gravitational force (G) of the foreign material adhering to the roller (12) from the electronic data processing device (102) to an electronic control unit (104) of the implement (10) and/or to an electronic control device (106) of a towing and/or carrier vehicle for the implement (10); and/or
- displaying, by means of an electronic display device, an operator instruction relating to the presence of foreign material adhering to the roller (12) and/or the calculated weight data and/or the calculated weight and/or the calculated gravitational force (G) of the foreign material adhering to the roller (12); and/or
- storing the calculated weight data and/or the calculated weight and/or the calculated gravitational force (G) of the foreign material adhering to the roller (12) on an electronic data storage device of the data processing device (102) and/or the control unit (104) and/or the control device (106) and/or on an external electronic data storage device.

4. Method according to any of the preceding claims,
**characterized in that** the operating state-dependent follow-up actions comprise
- deriving, by means of the electronic data processing device (102), warnings relating to an operating state and/or load state of the roller (12) on the basis of the captured sensor data; and/or
- deriving, by means of the electronic data processing device (102), operating recommendations relating to the operation and/or setting of the implement (10) and/or the roller (12) on the basis of the captured sensor data; and/or
- transmitting warnings and/or operating recommendations from the electronic data processing device (102) to an electronic control unit (104) of the implement (10) and/or to an electronic control device (106) of a towing and/or carrier vehicle for the implement (10); and/or
- displaying warnings and/or operating recommendations by means of an electronic display device.

5. Method according to any of the preceding claims,
**characterized in that** the operating state-dependent follow-up actions comprise
- deriving, by means of the electronic data processing device (102), control specifications for controlling the implement (10) and/or the towing and/or carrier vehicle for the implement (10) for a current soil-cultivating operation and/or for future soil-cultivating operations on an agricultural area (N) on the basis of the captured sensor data; and/or
- transmitting control specifications from the electronic data processing device (102) to the electronic control unit (104) of the implement (10) and/or to the electronic control device (106) of a towing and/or carrier vehicle for the implement (10); and/or
- storing the control specifications on an electronic data storage device of the data processing device (102) and/or the control unit (104) and/or the control device (106) and/or on an external electronic data storage device;
- reading out the control specifications from the electronic data storage device of the data processing device (102) and/or the control unit (104) and/or the control device (106) and/or from the external electronic data storage device; and/or
- controlling the implement (10) during a soil-cultivating process by means of the electronic control unit (104) and/or the towing or carrier vehicle of the implement (10) by means of the electronic control device (106) on the basis of the control specifications.

6. Method according to claim 5,
**characterized in that** the control specifications relate to
- adapting the working depth (T) of soil-cultivating tools of the implement (10) in the soil of an agricultural area (N) by means of an adjustment device (22) for the roller (12); and/or
- lifting off the roller (12) and/or the implement (10) by means of a lifting-off device to stop the roller (12) being in contact with the soil of the agricultural area (N); and/or
- slowing down and/or interrupting the soil-cultivating process by the implement (10); and/or
- performing a cleaning process to clean adhering foreign materials off the roller (12).

7. Method according to any of the preceding claims,
**characterized in that** the operating state-dependent follow-up actions comprise
- capturing, by means of an electronic position capturing device (108), position data relating to the geo-position of the implement (10) during the soil-cultivating process, in particular depending on the captured sensor data; and/or
- storing the captured position data on the electronic data storage device of the data processing device (102) and/or the control unit (104) and/or the control device (106) and/or on the external electronic data storage device.

8. Method according to any of the preceding claims,
**characterized in that** the operating state-dependent follow-up actions comprise
- determining a maintenance interval for the implement (10) on the basis of the captured sensor data; and/or
- adapting a maintenance interval for the implement (10) on the basis of the captured sensor data.

9. Method according to any of the preceding claims,
**characterized in that** the operating state-dependent follow-up actions comprise checking and/or correcting the captured sensor data by means of the electronic data processing device (102), the electronic data processing device (102) filtering the captured sensor data preferably on the basis of a defined sensor data limit range.

10. Agricultural implement (10), in particular an agricultural cultivator and/or agricultural seed drill, comprising
- a roller (12), which is attached to a support frame (20) of the implement (10) via at least one support arm (18);
having at least one sensor-based capturing device (100) which is configured to capture a current operating state of the roller (12), the agricultural implement being configured to
- evaluate, by means of an electronic data processing device (102), the captured sensor data to initiate operating state-dependent follow-up actions,
**characterized in that** the operating state-dependent follow-up actions comprise
- calculating weight data relating to the weight and/or the gravitational force (G) of the roller (12) on the basis of the captured sensor data; and
- determining the presence of foreign material adhering to the roller (12) on the basis of the calculated weight data and/or the captured sensor data.

11. Agricultural implement (10) according to claim 10,
**characterized in that** the implement (10) comprises an adjustment device (22) for adjusting the working depth (T) of soil-cultivating tools of the implement (10) in the soil of an agricultural area (N), it being possible to capture, by means of the sensor-based capturing device (100), the current operating state of the roller (12) via a change in the state of the adjustment device (22).

12. Agricultural implement (10) according to claim 11,
**characterized in that** the adjustment device (22)
- is in the form of a pressurized adjustment device (22), in particular a hydraulic or pneumatic adjustment device (22), it being possible to capture, by means of the sensor-based capturing device (100), a pressure (D1, D2) relating to the adjustment device (22); or
- is in the form of a mechanical adjustment device (12), it being possible to capture, by means of the sensor-based capturing device (100), a force acting on the adjustment device (22).

13. Agricultural implement (10) according to any of claims 10 to 12,
**characterized in that** the implement (10) comprises at least two adjustment devices (22) and at least one sensor-based capturing device (100) is arranged on each adjustment device (22), it being possible to determine the current operating state of the roller (12) preferably by comparing, by means of an electronic data processing device (102), the changes in state of the adjustment devices (22) captured by the sensor-based capturing devices (100).

## Revendications

1. Procédé permettant de faire fonctionner un appareil de travail (10) agricole, en particulier un cultivateur agricole et/ou un semoir agricole, comportant les étapes consistant à :
- détecter des données de capteur relatives à un état de fonctionnement actuel d'un rouleau (12) de l'appareil de travail (10) agricole au moyen d'au moins un dispositif de détection à capteur (100) ;
- évaluer les données de capteur détectées pour le lancement de mesures suivantes dépendant de l'état de fonctionnement au moyen d'un dispositif de traitement de données (102) électronique,
**caractérisé en ce que** les mesures suivantes dépendant de l'état de fonctionnement comprennent
- le calcul de données de poids relatives au poids et/ou à la force du poids (G) du rouleau (12) sur la base des données de capteur détectées ; et
- la détermination de la présence de matière étrangère adhérant au rouleau (12) sur la base des données de poids calculées et/ou des données de capteur détectées.

2. Procédé selon la revendication 1,
**caractérisé en ce que** les mesures suivantes dépendant de l'état de fonctionnement comprennent
- le calcul de données de force relatives à des forces de traction et/ou de pression agissant sur le rouleau (12) sur la base des données de capteur détectées ; et/ou
- le calcul de données de pression d'appui relatives à la pression d'appui (A) du rouleau (12) sur le sol d'une surface agricole utile (N) sur la base des données de capteur détectées ; et/ou
- la transmission des données de capteur détectées et/ou des données de force calculées et/ou des données de pression d'appui calculées depuis le dispositif de traitement de données (102) électronique à une unité de commande (104) électronique de l'appareil de travail (10) et/ou à un dispositif de commande (106) électronique d'un véhicule tracteur et/ou porteur pour l'appareil de travail (10) ; et/ou
- l'affichage des données de capteur détectées et/ou des données de force calculées et/ou des données de pression d'appui calculées au moyen d'un dispositif d'affichage électronique ; et/ou
- la mémorisation des données de capteur détectées et/ou des données de force calculées et/ou des données de pression d'appui calculées sur une mémoire de données électronique du dispositif de traitement de données (102) et/ou de l'unité de commande (104) et/ou du dispositif de commande (106) et/ou sur une mémoire de données électronique externe.

3. Procédé selon la revendication 1 ou 2,
**caractérisé en ce que** les mesures suivantes dépendant de l'état de fonctionnement comprennent
- le calcul du poids et/ou de la force du poids (G) de la matière étrangère adhérant au rouleau (12) sur la base des données de capteur détectées et/ou des données de poids calculées ; et/ou
- la transmission des données de poids calculées et/ou du poids calculé et/ou de la force du poids (G) calculée de la matière étrangère adhérant au rouleau (12) depuis le dispositif de traitement de données (102) électronique à une unité de commande (104) électronique de l'appareil de travail (10) et/ou à un dispositif de commande (106) électronique d'un véhicule tracteur et/ou porteur pour l'appareil de travail (10) ; et/ou
- l'affichage d'une indication utilisateur relative à la présence de matière étrangère adhérant au rouleau (12) et/ou des données de poids calculées et/ou du poids calculé et/ou de la force du poids (G) calculée de la matière étrangère adhérant au rouleau (12) au moyen d'un dispositif d'affichage électronique ; et/ou
- la mémorisation des données de poids calculées et/ou du poids calculé et/ou de la force du poids (G) calculée de la matière étrangère adhérant au rouleau (12) sur une mémoire de données électronique du dispositif de traitement de données (102) et/ou de l'unité de commande (104) et/ou du dispositif de commande (106) et/ou sur une mémoire de données électronique externe.

4. Procédé selon l'une des revendications précédentes,
**caractérisé en ce que** les mesures suivantes dépendant de l'état de fonctionnement comprennent
- la déduction d'indications d'avertissement relatives à un état de fonctionnement et/ou à un état de chargement du rouleau (12) sur la base des données de capteur détectées au moyen du dispositif de traitement de données (102) électronique ; et/ou
- la déduction de recommandations de fonctionnement relatives au fonctionnement et/ou au réglage de l'appareil de travail (10) et/ou du cylindre (12) sur la base des données de capteur détectées au moyen du dispositif de traitement de données (102) électronique ; et/ou
- la transmission des indications d'avertissement et/ou des recommandations de fonctionnement depuis le dispositif de traitement de données (102) électronique à une unité de commande (104) électronique de l'appareil de travail (10) et/ou à un dispositif de commande (106) électronique d'un véhicule tracteur et/ou porteur pour l'appareil de travail (10) ; et/ou
- l'affichage des indications d'avertissement et/ou des recommandations de fonctionnement au moyen d'un dispositif d'affichage électronique.

5. Procédé selon l'une des revendications précédentes,
**caractérisé en ce que** les mesures suivantes dépendant de l'état de fonctionnement comprennent
- la déduction de consignes de commande pour la commande de l'appareil de travail (10) et/ou du véhicule tracteur et/ou porteur pour l'appareil de travail (10) pour un processus de travail du sol actuel et/ou pour des processus de travail du sol futurs sur une surface agricole utile (N) sur la base des données de capteurs détectées au moyen du dispositif de traitement de données (102) électronique ; et/ou
- la transmission des consignes de commande depuis le dispositif de traitement de données (102) électronique à l'unité de commande (104) électronique de l'appareil de travail (10) et/ou au dispositif de commande (106) électronique d'un véhicule tracteur et/ou porteur pour l'appareil de travail (10) ; et/ou
- la mémorisation des consignes de commande sur une mémoire de données électronique du dispositif de traitement de données (102) et/ou de l'unité de commande (104) et/ou du dispositif de commande (106) et/ou sur une mémoire de données électronique externe ;
- la lecture des consignes de commande à partir de la mémoire de données électronique du dispositif de traitement de données (102) et/ou de l'unité de commande (104) et/ou du dispositif de commande (106) et/ou à partir de la mémoire de données électronique externe ; et/ou
- la commande de l'appareil de travail (10) pendant un processus de travail du sol au moyen de l'unité de commande (104) électronique et/ou du véhicule tracteur ou porteur de l'appareil de travail (10) au moyen du dispositif de commande (106) électronique sur la base des consignes de commande.

6. Procédé selon la revendication 5,
**caractérisé en ce que** les consignes de commande concernent
- l'ajustement de la profondeur de travail (T) d'outils de travail du sol de l'appareil de travail (10) dans le sol d'une surface agricole utile (N) au moyen d'un dispositif de réglage (22) pour le rouleau (12) ; et/ou
- le soulèvement du rouleau (12) et/ou de l'appareil de travail (10) pour supprimer le contact avec le sol du rouleau (12) avec le sol de la surface agricole utile (N) au moyen d'un dispositif de levage ; et/ou
- le ralentissement et/ou l'interruption du processus de travail du sol au moyen de l'appareil de travail (10) ; et/ou
- l'exécution d'un processus de nettoyage pour le nettoyage du rouleau (12) pour enlever de la matière étrangère qui s'y adhère.

7. Procédé selon l'une des revendications précédentes,
**caractérisé en ce que** les mesures suivantes dépendant de l'état de fonctionnement comprennent
- la détection de données de position relatives à la position géographique de l'appareil de travail (10) pendant le processus de travail du sol, en particulier en fonction des données de capteur détectées, au moyen d'un dispositif de détection de position (108) électronique ; et/ou
- la mémorisation des données de position détectées sur la mémoire de données électronique du dispositif de traitement de données (102) et/ou de l'unité de commande (104) et/ou du dispositif de commande (106) et/ou sur la mémoire de données électronique externe.

8. Procédé selon l'une des revendications précédentes,
**caractérisé en ce que** les mesures suivantes dépendant de l'état de fonctionnement comprennent
- la détermination d'un intervalle de maintenance pour l'appareil de travail (10) sur la base des données de capteur détectées ; et/ou
- l'ajustement d'un intervalle de maintenance pour l'appareil de travail (10) sur la base des données de capteur détectées.

9. Procédé selon l'une des revendications précédentes,
**caractérisé en ce que** les mesures suivantes dépendant de l'état de fonctionnement comprennent la vérification et/ou la correction des données de capteur détectées au moyen du dispositif de traitement de données (102) électronique, dans lequel le dispositif de traitement de données (102) électronique filtre les données de capteur détectées, de préférence sur la base d'une plage de valeurs limites de données de capteur définie.

10. Appareil de travail (10) agricole, en particulier cultivateur agricole et/ou semoir agricole, comportant
- un rouleau (12) qui est fixé à un cadre de support (20) de l'appareil de travail (10) par l'intermédiaire d'au moins un bras de support (18) ;
comprenant au moins un dispositif de détection à capteur (100) configuré pour détecter un état de fonctionnement actuel du rouleau (12), dans lequel l'appareil de travail agricole est configuré pour
- évaluer les données de capteur détectées pour la détermination de mesures suivantes dépendant de l'état de fonctionnement au moyen d'un dispositif de traitement de données (102) électronique,
**caractérisé en ce que** les mesures suivantes dépendant de l'état de fonctionnement comprennent
- le calcul de données de poids relatives au poids et/ou à la force du poids (G) du rouleau (12) sur la base des données de capteur détectées ; et
- la détermination de la présence de matière étrangère adhérant au rouleau (12) sur la base des données de poids calculées et/ou des données de capteur détectées.

11. Appareil de travail (10) agricole selon la revendication 10,
**caractérisé en ce que** l'appareil de travail (10) comprend un dispositif de réglage (22) permettant de régler la profondeur de travail (T) d'outils de travail du sol de l'appareil de travail (10) dans le sol d'une surface agricole utile (N), dans lequel l'état de fonctionnement actuel du rouleau (12) peut être détecté par l'intermédiaire d'un changement d'état du dispositif de réglage (22) au moyen du dispositif de détection à capteur (100).

12. Appareil de travail (10) agricole selon la revendication 11,
**caractérisé en ce que** le dispositif de réglage (22)
- est réalisé en tant que dispositif de réglage (22) soumis à la pression, en particulier en tant que dispositif de réglage (22) hydraulique ou pneumatique, dans lequel une pression (D1, D2) relative au dispositif de réglage (22) peut être détectée au moyen du dispositif de détection à capteur (100) ; ou
- est réalisé en tant que dispositif de réglage (12) mécanique, dans lequel une force agissant sur le dispositif de réglage (22) peut être détectée au moyen du dispositif de détection à capteur (100).

13. Appareil de travail (10) agricole selon l'une des revendications 10 à 12,
**caractérisé en ce que** l'appareil de travail (10) comprend au moins deux dispositifs de réglage (22) et au moins un dispositif de détection à capteur (100) est disposé sur chaque dispositif de réglage (22), dans lequel l'état de fonctionnement actuel du rouleau (12) peut être déterminé au moyen d'un dispositif de traitement de données (102) électronique, de préférence par une comparaison des changements d'état des dispositifs de réglage (22) détectés au moyen du dispositif de détection à capteur (100).
